# EUROPEAN PATENT APPLICATION

(11) **EP 2 757 624 A1**
(43) Date of publication of application: **23.07.2014**
(21) Application number: 12831663.5
(22) Date of filing: 04.09.2012
(51) Int. Cl.: H01M 10/04, H01M 2/26, H01M 4/06, H01M 4/13, H01M 4/24, H01M 4/66, H01M 4/70, H01M 6/10

(54) **CYLINDRICAL BATTERY**

(30) Priority: 14.09.2011 JP 2011200160; 14.09.2011 JP 2011200161
(71) Applicant: GS Yuasa International Ltd., Kisshoin, Minami-ku, Kyoto-shi, Kyoto 601-8520 (JP)
(72) Inventor: KANEMOTO, Manabu, Kyoto 601-8520 (JP); KODAMA, Mitsuhiro, Kyoto 601-8520 (JP); KAKEYA, Tadashi, Kyoto 601-8520 (JP)
(74) Representative: Isarpatent
(86) International application number: PCT/JP2012/072423
(87) International publication number: WO 2013/038946

(57) **Abstract**

The present invention makes it easy to press a positive electrode or a negative electrode to enhance discharge efficiency (in the case of a primary battery) or charge-discharge efficiency (in the case of a secondary battery) in a cylindrical battery and includes a cylindrical battery case 2 and a cylindrical element 3 disposed in the battery case 2 and formed by disposing a positive electrode 31 and a negative electrode 32 with a separator 33 sandwiched therebetween, in which the positive electrode 31 or the negative electrode 32 is split into a plurality of electrode pieces (31A, 31B, and the like) in a circumferential direction.

## Description

### TECHNICAL FIELD

The present invention relates to a cylindrical battery such as an alkaline storage battery and a lithium-ion secondary battery.

### BACKGROUND ART

As a cylindrical battery among alkaline storage batteries such as a nickel-cadmium rechargeable battery and a nickel-metal hydride rechargeable battery, there is a battery formed by housing an element, obtained by spirally winding band-shaped positive electrode plate and negative electrode plate with a separator sandwiched therebetween, in a cylindrical battery case (also referred to as a battery exterior case or a container case) and sealing the case as shown in Patent Document 1, for example. This cylindrical battery is formed by housing the element, obtained by spirally winding the band-shaped positive electrode plate and negative electrode plate into a substantially solid circular columnar shape with the separator sandwiched therebetween, in the battery case in order to increase a capacity.

In the meantime, the present applicant is advancing development of a low-capacity cylindrical battery according to uses in opposition to a recent trend in increase in capacities of cylindrical batteries. Specifically, the applicant is planning to form a positive electrode plate and a negative electrode plate into a cylindrical shape, while reducing the number of winding for spirally winding band-shaped positive electrode plate and negative electrode plate, and house them in a battery case.

### PRIOR ART DOCUMENT

### PATENT DOCUMENT

Patent Document 1: JP-A-2008-159357

### SUMMARY OF THE INVENTION

### PROBLEMS TO BE SOLVED BY THE INVENTION

When the element obtained by winding each of the positive electrode plate and the negative electrode plate in a small number of layers (e.g., one layer) into the cylindrical shape is housed in the battery case, it is necessary to press a positive electrode or a negative electrode positioned at an innermost layer of the element against the element so as not to reduce charge-discharge efficiency.

However, the present inventors found that the battery formed by housing the cylindrical element into the battery case as described above has the following difficulties. In other words, because the positive electrode or the negative electrode is formed by winding the band-shaped plate, in pressing the positive electrode or the negative electrode toward an inner peripheral face of the separator from an inner side, it is difficult to increase a diameter of the positive electrode or the negative electrode outward with the pressing force and it is difficult to press the element. As a result, pressing of the positive electrode and the negative electrode is insufficient, which reduces charge-discharge efficiency.

The present invention has been made to solve the above problems at once and its main intended object is to make it easy to press a positive electrode and a negative electrode to enhance discharge efficiency (in the case of a primary battery) or charge-discharge efficiency (in the case of a secondary battery) in a cylindrical battery.

### MEANS FOR SOLVING THE PROBLEMS

A cylindrical battery according to the present invention includes a cylindrical battery case and a cylindrical element including a positive electrode, a negative electrode, and a separator, wherein a space is formed on an inner side of the element and the positive electrode or the negative electrode is split into a plurality of electrode pieces in a circumferential direction.

In this cylindrical battery, the space is formed on the inner side of the element and therefore it is easy to press the element from a radially inner side toward a radially outer side. Moreover, because the positive electrode or the negative electrode is split into the plurality of electrode pieces in the circumferential direction, the respective electrode pieces move individually when the electrode pieces are pressed from the radially inner side toward the radially outer side and therefore it is easy to press the element. In this way, it is possible to enhance discharge efficiency (in the case of a primary battery) or charge-discharge efficiency (in the case of a secondary battery) of the cylindrical battery. When each of the positive electrode and the negative electrode is wound in one layer, it is possible to substantially reduce amounts of substrates for the positive electrode and the negative electrode, and the separator to be used and it is possible to reduce man-hours in manufacture such as winding of them.

When the space is formed on the inner side of the element, loosening of the positive electrode or the negative electrode may become a problem in some cases. Therefore, the cylindrical battery of the invention preferably includes a retaining member disposed in the space on the inner side of the element to press and retain the element from the inner side. In this way, because the retaining member presses the element from the inner side, it is possible to prevent reduction in current collecting efficiency by preventing falling off of an active material due to inward loosening of the positive electrode or the negative electrode. Moreover, because the retaining member keeps an outer peripheral face of the element and an inner peripheral face of the battery case pressed against each other, it is possible to prevent reduction in the discharge efficiency (in the case of the primary battery) or the charge-discharge efficiency (in the case of the secondary battery). Furthermore, by reducing the number of layers in which the element is wound into the cylindrical shape, it is possible to substantially reduce amounts of current collectors for the positive electrode and the negative electrode and the separator to be used and it is possible to reduce man-hours in manufacture such as winding of them.

The positive electrode or the negative electrode is preferably split into the plurality of electrode pieces having circumferential lengths smaller than or equal to a half circumference. In this way, because the electrode pieces have circumferential lengths smaller than or equal to the half circumference, electrode plates can be formed by press forming. When the electrode pieces of the electrode plate have greater circumferential lengths than the half circumference, it is difficult to form the electrode by press forming by using a press die and the electrode needs to be formed by winding, which increases defectives due to displacement in winding.

It is preferable that the positive electrode or the negative electrode has a longer edge in a direction of a winding axis of the element than a circumferential edge. In this way, the shape of the electrode is closer to a square than to a long band shape which is wound into a scroll, which makes handling in manufacture and a winding step easy. Moreover, pressing of the element also becomes easy, which enhances the charge efficiency (in the case of the primary battery) or the charge-discharge efficiency (in the case of the secondary battery) of the cylindrical battery.

It is preferable that the positive electrode or the negative electrode is formed by a metal plate having a large number of through holes as a substrate. Because a collector terminal is welded to a conductive body connected to an external portion, strength is required of it. For an electrode formed by using a porous medium, a compression step is used to obtain strength necessary for the welding. On the other hand, if the metal plate is used as the substrate, the collector terminal can be welded as it is without subjected to the compression step.

If the number of electrode pieces obtained by splitting is excessively increased, winding operation may become complicated. Therefore, it is preferable that the positive electrode or the negative electrode is split into two electrode pieces.

It is preferable that the positive electrode or the negative electrode includes a plurality of electrode piece portions formed by splitting in the circumferential direction and a connecting portion for connecting portions of the electrode piece portions adjacent to each other. In this way, because the respective electrode pieces move individually when the electrode pieces are pressed from the radially inner side toward the inner peripheral face of the separator, it is easy to press the element. Moreover, the electrode piece portions are connected and integrated by the connecting portion, which makes the handling in manufacture and the winding step easy. As a result, if each of the positive electrode and the negative electrode is wound in one layer, it is possible to substantially reduce the amounts of substrates for the positive electrode and the negative electrode, and the separator to be used and it is possible to reduce man-hours in manufacture such as winding of them.

In order to make a structure of the positive electrode or the negative electrode simple to further reduce the amounts of substrates for the electrode to be used and to reduce the number of parts, it is preferable that the connecting portion also functions as a collector terminal. Moreover, because current collection is carried out at the connecting portion, a current collecting distance to the active material becomes short and resistance reduces, which is preferable.

From a view point of further reducing the number of parts, it is conceivable that the positive electrode or the negative electrode is formed by a single substrate. By forming the electrode by using the single substrate, it is possible omit a welding step. The connecting portion also functioning as the collector terminal is advantageous in that there is no welded portion on the way to the collector terminal and that the resistance does not increase.

Preferably, the positive electrode or the negative electrode is formed by a metal plate having a large number of through holes as a substrate and the electrode pieces and the connecting portion are formed integrally. In this way, it is possible to easily form a round electrode only by folding back the electrode at the connecting portion.

It is preferable that edges in the circumferential direction of the electrode pieces are connected by the connecting portion. In this way, by folding back the connecting portion, the connecting portion becomes the collector terminal and also the collector terminal can be used as an upper end or a lower end in an axial direction of the cylinder, which makes it easy to weld the collector terminal to the battery case or a sealing body.

It is preferable that the connecting portion is perpendicular to the winding axis of the element. If the connecting portion is disposed to be parallel to the winding axis of the element, the portion is an area where electrode reaction is possible and therefore a capacity contributing to the electrode reaction is reduced. Little electrode reaction occurs in a plane perpendicular to the winding axis and therefore it is possible to reduce the capacity which reduces the portion contributing to the electrode reaction by disposing the connection portion in the plane perpendicular to the winding axis.

In order to make it easy to fold the connecting portion, it is preferable that a slit is formed at the connecting portion.

Preferably, the positive electrode or the negative electrode includes the plurality of electrode piece portions and the connecting portion which connects upper end portions of adjacent edges of the electrode piece portions adjacent to each other and which is in a rectangular shape extending upward and outward, and vertical dimensions of the electrode piece portions and a vertical dimension of the connecting portion are equal to each other. In this structure, the electrode piece portions (coated portions) which are portions coated with the active material and the collector terminal (uncoated portion) not coated with the active material are equal in length, which substantially prevents losses due to punching of the plates in continuous coating.

### ADVANTAGES OF THE INVENTION

According to the invention formed as described above, it is possible to make it easy to press the positive electrode and the negative electrode to enhance the discharge efficiency (in the case of the primary battery) or the charge-discharge efficiency (in the case of the secondary battery) in the cylindrical battery.

### BRIEF DESCRIPTION OF THE DRAWINGS

Fig. 1 is a vertical sectional view of an alkaline storage battery according to a first embodiment.
Fig. 2 is a cross-sectional view of the alkaline storage battery in the first embodiment.
Fig. 3 is a developed plan view of electrode pieces in the first embodiment.
Fig. 4 is a view showing press working of the electrode pieces in the first embodiment.
Fig. 5 is a cross-sectional view of an alkaline storage battery in a modified embodiment.
Fig. 6 is a cross-sectional view of an alkaline storage battery in a modified embodiment.
Fig. 7 is a vertical sectional view of an alkaline storage battery according to a second embodiment.
Fig. 8 is a plan view showing a partial section of the alkaline storage battery in the second embodiment excluding a sealing body.
Fig. 9 is a developed view of a positive electrode plate in the second embodiment.
Fig. 10 is a view showing a manufacturing method of the positive electrode plate in the second embodiment.

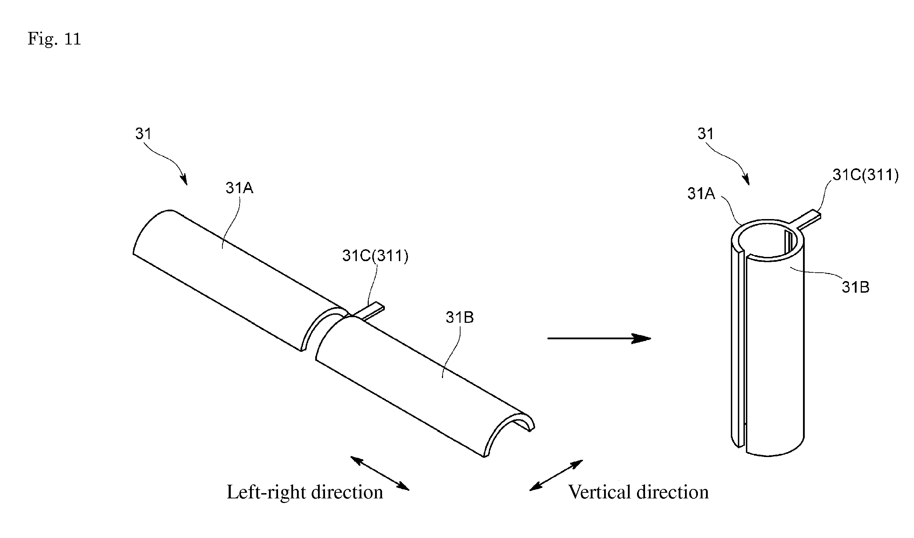

Fig. 11 is a view showing a bent form of the positive electrode plate in the second embodiment.
Fig. 12 is a cross-sectional view of an alkaline storage battery in a modified embodiment.
Fig. 13 is a cross-sectional view of an alkaline storage battery in a modified embodiment.

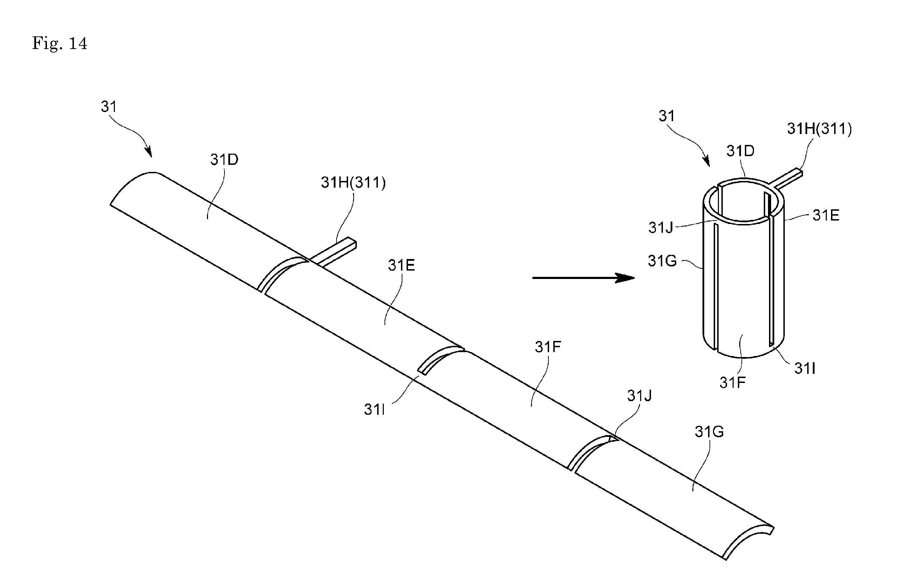

Fig. 14 is a cross-sectional view of an alkaline storage battery in a modified embodiment.
Fig. 15 is a view showing a bent form of a positive electrode plate in the modified embodiment.

### DESCRIPTION OF REFERENCE SIGNS

100... secondary battery (alkaline storage battery)
2... battery case
3... element (electrode group)
31... positive electrode plate (positive electrode)
31A, 31B... electrode piece of positive electrode plate
32... negative electrode plate (negative electrode)
32A, 32B... electrode piece of negative electrode plate
33... separator

### MODES FOR CARRYING OUT THE INVENTION

### <First Embodiment>

A first embodiment of a secondary battery according to the present invention will be described below with reference to the drawings.

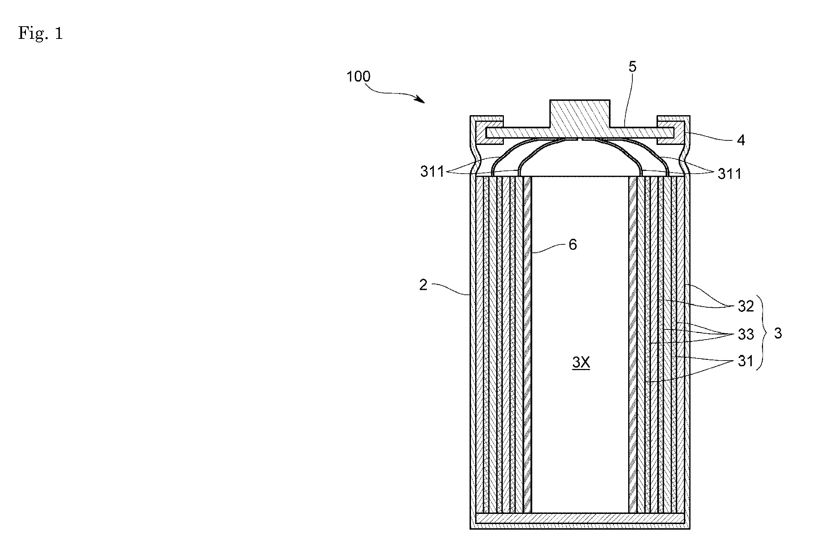

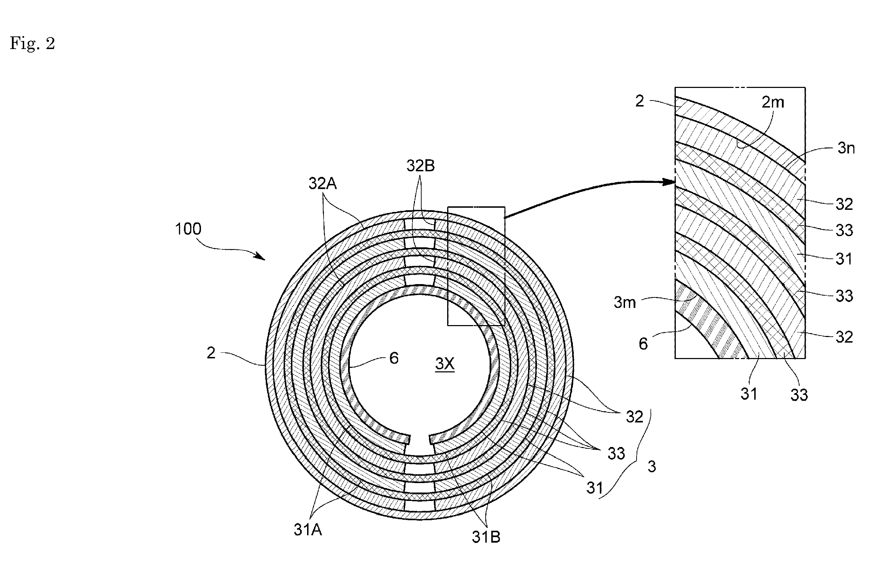

A secondary battery 100 according to the first embodiment is an alkaline storage battery such as a nickel-cadmium rechargeable battery and a nickel-metal hydride rechargeable battery. Specifically, the battery is a low-capacity cylindrical battery with a capacity of 1800 mAh or lower in the case of an LR6 battery and a capacity of 650 mAh or lower in the case of an LR03 battery. As shown in Figs. 1 and 2, the battery includes a metal battery case 2 in a cylindrical shape with a bottom and a cylindrical element 3 disposed in the battery case 2 and having positive electrode plates 31, negative electrode plates 32, and separators 33.

The battery case 2 is in a cylindrical shape with a bottom and plated with nickel. As shown in Fig. 1, the battery case 2 has an upper opening sealed with a sealing body 5 with an insulating body 4 interposed therebetween as shown in Fig. 1. To a back face of the sealing body 5, collector terminals 311 provided to protrude from upper end portions of the positive electrode plates 31 are connected by welding, for example, and the sealing body 5 serves as a positive electrode terminal. As will be described later, an outer peripheral face 3n of the negative electrode plate 32 positioned at an outermost layer of the element 3 is in contact with an inner peripheral face 2m of the battery case 2 and the battery case 2 itself serves as a negative electrode terminal (see a partial enlarged view in Fig. 2).

The element 3 is in the cylindrical shape and formed by concentrically disposing the positive electrode plates 31 wound in two layers and the negative electrode plates 32 wound in two layers with the separators 33 made of polyolefin nonwoven fabric, for example, sandwiched therebetween. The separators are impregnated with an electrolyte solution such as potassium hydroxide. Alternatively, envelope-shaped separators made of polyethylene may be used.

Each of the positive electrode plates 31 includes a positive current collector formed by a perforated steel sheet which is a two-dimensional substrate plated with nickel, for example, and a positive active material applied on the positive current collector. The positive active material is nickel hydroxide, for example, in the case of the nickel-cadmium rechargeable battery and is nickel hydroxide to which calcium hydroxide is added, for example, in the case of the nickel-metal hydride rechargeable battery.

Each of the negative electrode plates 32 includes a negative current collector formed by a perforated steel sheet plated with nickel similarly to the positive electrode plates 31 and a negative active material applied on the negative current collector. The negative active material is a mixture of cadmium oxide powder and metallic cadmium powder, for example, in the case of the nickel-cadmium rechargeable battery and is mainly AB₅-type (rare earth) or AB₂-type (Laves phase) hydrogen storage alloy powder, for example, in the case of the nickel-metal hydride rechargeable battery. Because the positive electrode plates 31 and the negative electrode plates 32 are formed by using not foamed substrates such as nickel porous bodies but the two-dimensional substrates such as perforated steel sheets, the active materials are likely to fall off.

As shown in Fig. 2, each of the positive electrode plates 31 is split into two electrode pieces 31A and 31B in a circumferential direction and each of the negative electrode plates 32 is split into two electrode pieces 32A and 32B in the circumferential direction.

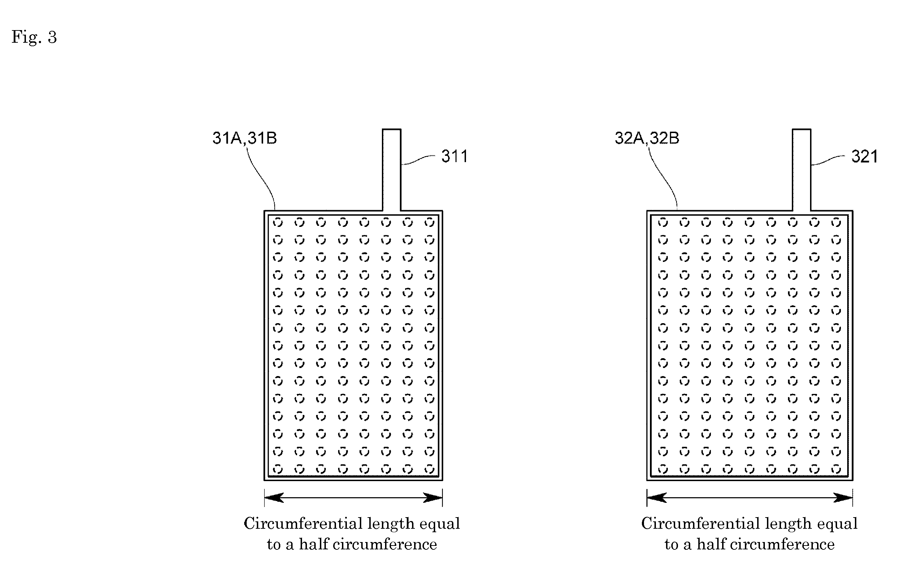

Specifically, each of the electrode pieces 31A, 31B, 32A, and 32B are in substantially rectangular shapes in a plan view and have circumferential lengths corresponding to substantially a half circumference in a position where each of the electrode pieces 31A, 31B, 32A, and 32B is disposed as shown in Fig. 3. In other words, in the embodiment, each of the electrode pieces 31A, 31B, 32A, and 32B disposed in the battery case 2 forms substantially a half circle when seen in an axial direction. Between two electrode pieces adjacent to each other in the circumferential direction (e.g., 31A and 31B), slits along the axial direction are formed.

As shown in Fig. 3, collector terminals 311, 321 are respectively provided to upper end portions of the respective electrode pieces 31A, 31B, 32A, and 32B. After the electrode pieces 31A, 31B, 32A, and 32B are housed in the battery case 2, the collector terminals 311 of the positive electrode plates 31 are connected to the sealing body 5 and the collector terminals 321 of the negative electrode plates 32 are connected to the battery case 2. The respective electrode pieces 31A, 31B, 32A, and 32B and the collector terminals 311 and 321 provided to the electrode pieces 31A, 31B, 32A, and 32B are integrally formed of perforated steel sheets.

As shown in Figs. 1 and 2, the alkaline storage battery 100 in the embodiment preferably has a retaining member 6 disposed in a hollow portion 3X of the element 3 and in contact with an inner peripheral face 3m of the element 3 to keep the outer peripheral face 3n of the element 3 in contact with the inner peripheral face 2m of the battery case 2.

As shown in Figs. 1 and 2, the retaining member 6 is in contact with the entire inner peripheral face 3m of the element 3, i.e., the entire inner peripheral face of the positive electrode plate 31 positioned at an innermost layer in the embodiment and is formed by a single flat plate made of elastic resin such as polypropylene or nylon or metal or a flat plate formed by laminating the plates. The retaining member 6 formed by the flat plate is bent and deformed into a cylindrical shape and disposed in the hollow portion 3X of the element 3. Due to elastic resilience of the retaining member 6, an outer peripheral face 6n of the retaining member 6 is pressed against and brought in contact with the inner peripheral face 3m of the element 3 and the outer peripheral face 3n of the element 3 is pressed against and brought in contact with the inner peripheral face 2m of the battery case 2 (see the partial enlarged view in Fig. 2). More specifically, the retaining member 6 preferably has a length greater than or equal to an inner circumference of the hollow portion 3X of the element 3 and a width substantially equal to an axial length of the hollow portion 3X of the element 3 so as to be pressed against and brought in contact with the entire inner peripheral face 3m of the element 3. Because the retaining member 6 is pressed against and brought in contact with the inner peripheral face 3m of the element 3, the retaining member 6 prevents falling off of the positive active material of the positive electrode plate 31 positioned at the innermost layer and also prevents falling off of the negative active materials of the negative electrode plates 32. In this way, it is possible to prevent reduction in current collecting efficiency. Moreover, because the retaining member 6 keeps the outer peripheral face 3n of the element 3 and the inner peripheral face 2m of the battery case 2 in contact with each other, it is possible to secure the contact between the outer peripheral face 3n of the element 3 and the inner peripheral face 2m of the battery case 2 to thereby prevent reduction in charge-discharge efficiency. Moreover, because the single plate is deformed into the cylindrical shape to form the retaining member 6, it is possible to secure a large space in the battery 100 to thereby prevent increase in battery internal pressure.

Next, a manufacturing method of the alkaline storage battery 100 in the embodiment will be described briefly.

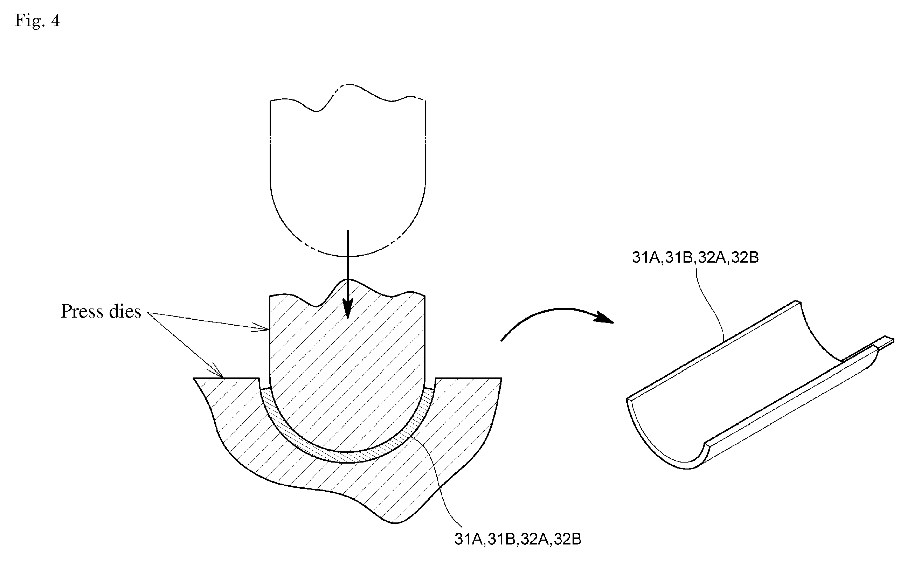

First, the two electrode pieces 32A and 32B of the negative electrode plate 32 are respectively deformed into shapes of semicylinders by using press dies (see Fig. 4) and housed into the battery case 2. Then, the separator 33 wound into a cylindrical shape is housed on a radially inner side of the electrode pieces 32A and 32B. Next, the two electrode pieces 31A and 31B of the positive electrode plate 31 are respectively deformed into shapes of semicylinders by using press dies (see Fig. 4) and housed on a radially inner side of the separator 33 in the battery case 2. By repeating these operations, the positive electrode plates 31 wound in two layers and the negative electrode plates 32 wound in two layers are concentrically housed in the battery case 2 with the separator 33 sandwiched therebetween. Then, the electrolyte solution is filled. After that, in the hollow portion 3X of the element 3, the retaining member 6 deformed into a cylindrical shape smaller than an inner diameter of the hollow portion 3X is disposed. In this way, it is possible to fix the element 3 to the battery case 2. Then, the collector terminals 321 of the electrode pieces 32A and 32B of the negative electrode plates 32 are connected to a bottom face of the battery case 2, the collector terminals 311 of the electrode pieces 31A and 31B of the positive electrode plates 31 are connected to the back face of the sealing body 5, and the sealing body 5 is fixed to the upper opening of the battery case 2 by caulking or the like with the insulating body 4 interposed therebetween. The electrolyte solution may be filled after the element 3 is housed into the battery case 2 and the retaining member 6 is disposed.

In the alkaline storage battery 100 according to the first embodiment formed as described above, because each of the positive electrode plates 31 and the negative electrode plates 32 is split into two electrode pieces 31A and 31B or 32A and 32B in the circumferential direction, the respective electrode pieces 31A, 31B, 32A, and 32B move individually when they are pressed from the inner side toward the inner peripheral faces of the separators 33. Therefore, the electrode pieces 31A, 31B, 32A, and 32B are more likely to come in contact with the inner peripheral faces of the separators 33. As a result, it is possible to enhance the charge-discharge efficiency of the alkaline storage battery 100.

Moreover, the slits formed by the electrode pieces 31A and 31B of the positive electrode plates 31 and the slits formed by the electrode pieces 32A and 32B of the negative electrode plates 32 are disposed in the same positions in the circumferential direction and these slits make it easy to expand and contract the element 3.

The invention is not limited to the first embodiment.

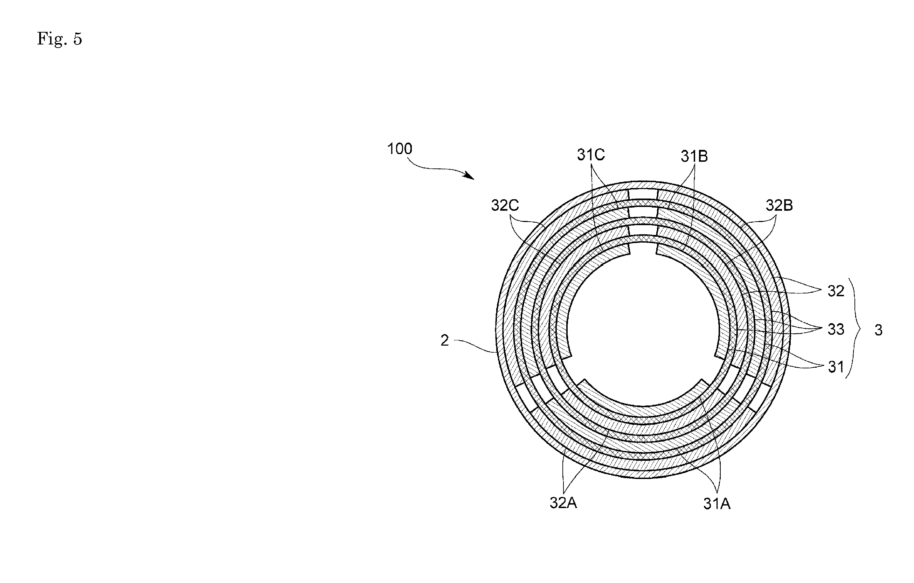

For example, although each of the positive electrode plates and the negative electrode plates is split into two in the above first embodiment, dimensions of the left and right two electrode pieces may be different. Moreover each of the positive electrode plates or the negative electrode plates may be split into three or more. Here, an example in which each of the plates is split into three (electrode pieces 31A to 31C and electrode pieces 32A to 32C) is shown in Fig. 5. By increasing the number of electrode pieces formed by splitting in this manner, it is possible to more reliably bring the respective electrode pieces and the separators into contact with each other.

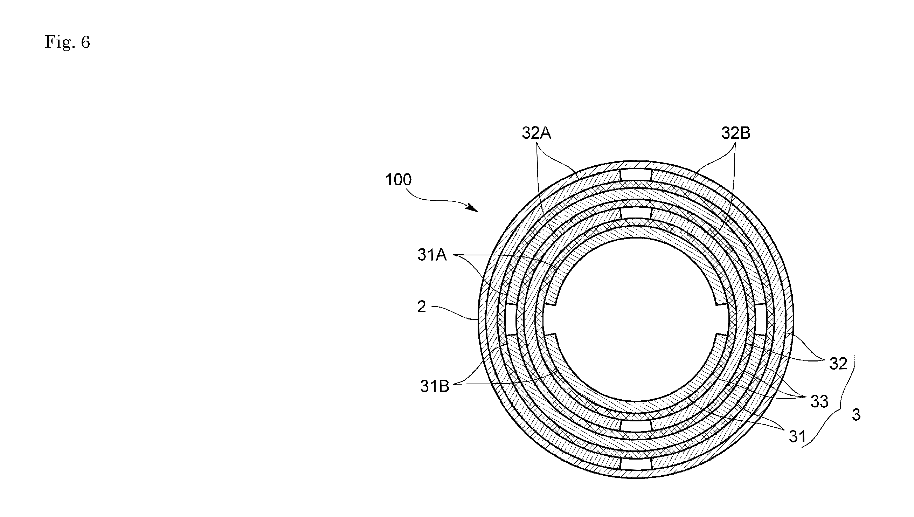

As shown in Fig. 6, slits formed by electrode pieces 31A and 31B of positive electrode plates 31 and slits formed by electrode pieces 32A and 32B of negative electrode plates 32 may be disposed in different positions in a circumferential direction. In this way, it is possible to make the positive electrode plates 31 and the negative electrode plates 32 less likely to loosen after the outer peripheral face of the element 3 is pressed against and brought in contact with the inner peripheral face of the battery case 2 or the positive electrode plates 31 and the negative electrode plates 32 forming the element 3 are pressed with the separators 33 sandwiched therebetween. Therefore, it is possible to prevent reduction in charge-discharge efficiency of a battery or falling off of positive or negative active material for a long time period. Although the slits formed by the electrode pieces 31A and 31B of the two positive electrode plates 31 are oriented in the same direction in the circumferential direction and the slits formed by the electrode pieces 32A and 32B of the two negative electrode plates 32 are oriented in the same direction in the circumferential direction in Fig. 6, they may be disposed in different positions from each other in the circumferential direction.

Furthermore, although the element in the first embodiment has the two-layer structure, it may have a structure of one, three, or more layers. Especially in the one-layer structure in which each of a positive electrode plate 31 and a negative electrode plate 32 is wound in one layer, it is possible to substantially reduce amounts of substrates for the positive electrode plate 31 and the negative electrode plate 32, and the separator 33 to be used and it is possible to reduce man-hours in manufacture such as winding of them.

Moreover, although each of the positive electrode plates and the negative electrode plates is split into the plurality of electrode pieces in the above first embodiment, either one of them may be split into a plurality of electrode pieces. Especially when a positive electrode plate positioned on an inner side of a separator is split, it is possible to make it easy to press the positive electrode plate against the separator from the inner side to press the element.

### <Second Embodiment>

Next, a second embodiment of the secondary battery according to the invention will be described with reference to the drawings. Members which are the same as or corresponding to those in the above first embodiment are provided with the same reference signs.

A secondary battery 100 according to the second embodiment is different from the above embodiment in a structure of an element 3 and especially different in a structure of a positive electrode plate 31.

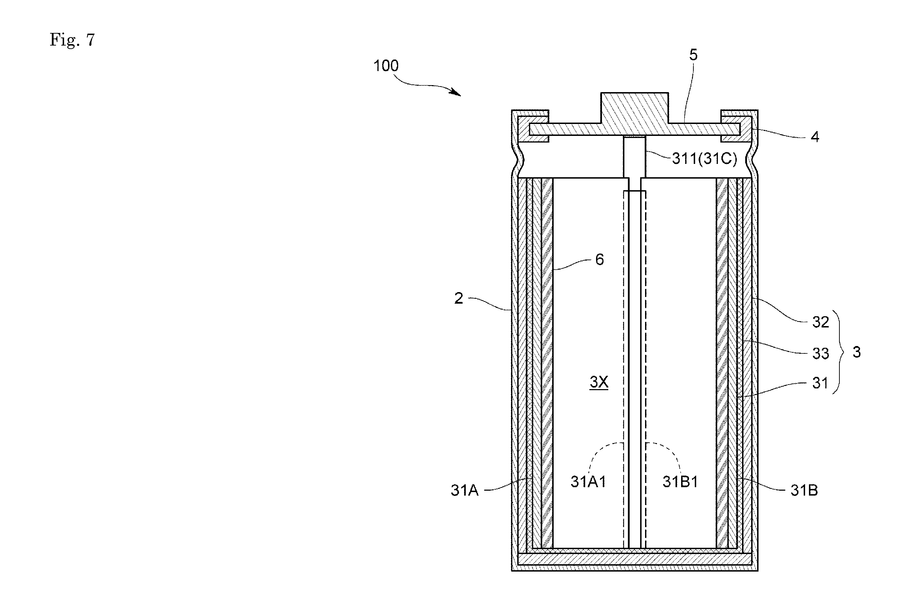

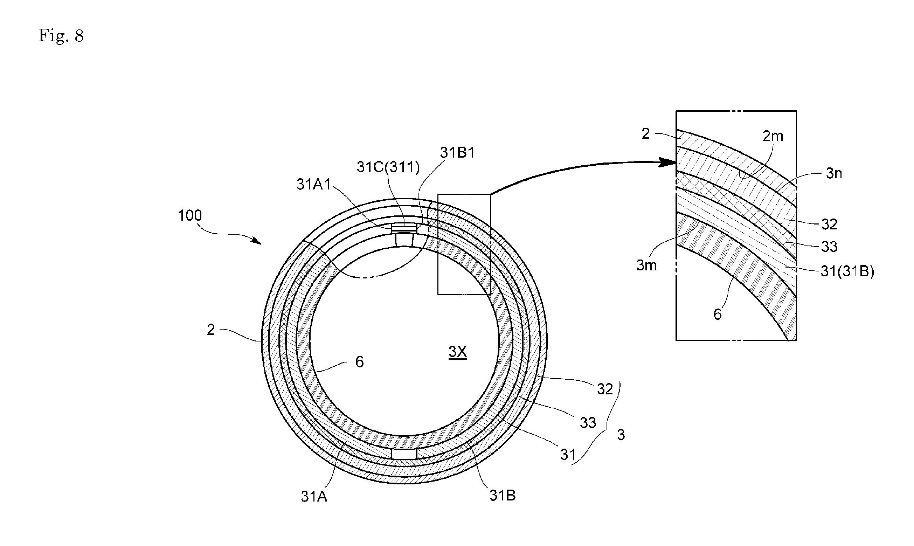

As shown in Figs. 7 and 8, the element 3 in the embodiment has a cylindrical one-layer structure in which the positive electrode plate 31 wound in one layer and a negative electrode plate 32 wound in one layer are concentrically disposed with a separator 33 made of polyolefin nonwoven fabric, for example, sandwiched therebetween. The separator is impregnated with an electrolyte solution such as potassium hydroxide.

As shown in Figs. 7 to 9, the positive electrode plate 31 in contact with an inner peripheral face of the separator 33 has two electrode piece portions 31A and 31B formed by splitting into two in a circumferential direction and a connecting portion 31C functioning as a collector terminal 311 for connecting upper end portions of one adjacent edges 31A1 and 31B1 of the electrode piece portions 31A and 31B adjacent to each other. The positive electrode plate 31 is formed into a substantially C shape when seen in an axial direction. The positive electrode plate 31 is formed by using a perforated steel sheet as a substrate as described above and current collector portions 31A2 and 31B2 of the electrode piece portions 31A and 31B and the connecting portion 31C are integrally formed of the perforated steel sheet.

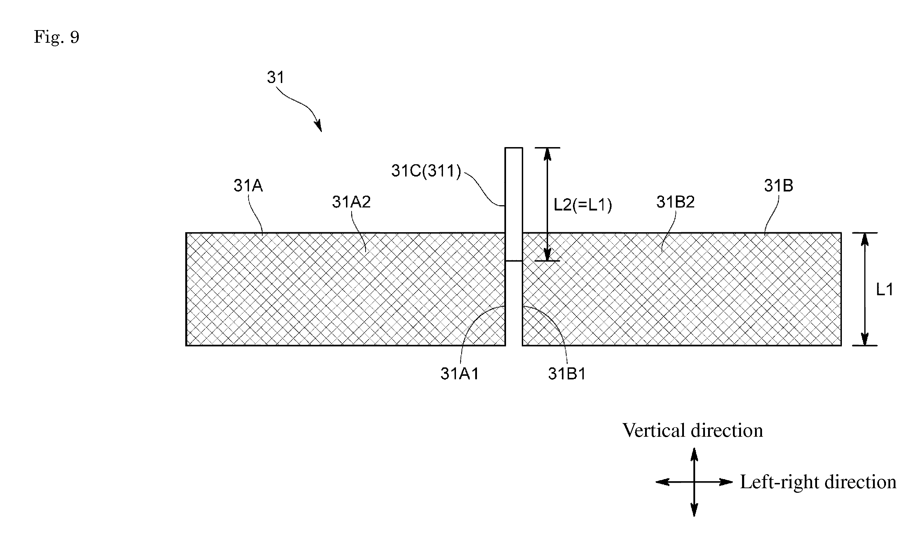

Specifically, as shown in Fig. 9, the positive electrode plate 31 in a developed state before housed into the battery case 2 has the two electrode piece portions 31A and 31B in the same rectangular shapes adjacent to each other in a left-right direction and the connecting portion 31C which connects the upper end portions of the adjacent edges 31A1 and 31B1 of the electrode piece portions 31A and 31B adjacent to each other and which is in a rectangular shape extending upward and outward. These electrode piece portions 31A and 31B are formed in such a manner that their upper and lower edges along the left-right direction which are intended to be axial edges are longer than left and right edges along a vertical direction which are intended to be circumferential edges. The positive electrode plate 31 is in a shape bilaterally symmetric with respect to a central axis of the connecting portion 31C. The positive electrode plate 31 is formed in such a manner that vertical dimensions L1 of the electrode piece portions 31A and 31B are equal to a vertical dimension L2 of the connecting portion 31C (L1=L2).

As shown in Figs. 7 and 8, the alkaline storage battery 100 in the embodiment preferably has a retaining member 6 disposed in a hollow portion 3X of the element 3 and in contact with an inner peripheral face 3m of the element 3 to keep an outer peripheral face 3n of the element 3 in contact with an inner peripheral face 2m of the battery case 2.

As shown in Figs. 7 and 8, the retaining member 6 is in contact with the entire inner peripheral face 3m of the element 3, i.e., the entire inner peripheral face of the positive electrode plate 31 positioned at an innermost layer in the embodiment. The retaining member 6 has elasticity and is formed by a single flat plate made of elastic resin such as polypropylene or nylon or metal or a flat plate formed by laminating the plates. The retaining member 6 formed by the flat plate is bent and deformed into a cylindrical shape and disposed in the hollow portion 3X of the element 3. Due to elastic resilience of the retaining member 6, an outer peripheral face 6n of the retaining member 6 is pressed against and brought in contact with the inner peripheral face 3m of the element 3 and the outer peripheral face 3n of the element 3 is pressed against and brought in contact with the inner peripheral face 2m of the battery case 2 (see the partial enlarged view in Fig. 8). More specifically, the retaining member 6 preferably has a length greater than or equal to an inner circumference of the hollow portion 3X of the element 3 and a width substantially equal to an axial length of the hollow portion 3X of the element 3 so as to be pressed against and brought in contact with the entire inner peripheral face 3m of the element 3. Because the single plate is deformed into the cylindrical shape to form the retaining member 6, it is possible to secure a large space in the battery 100 to thereby prevent increase in battery internal pressure.

Next, a manufacturing method of the positive electrode plate 31 formed as described above will be described briefly.

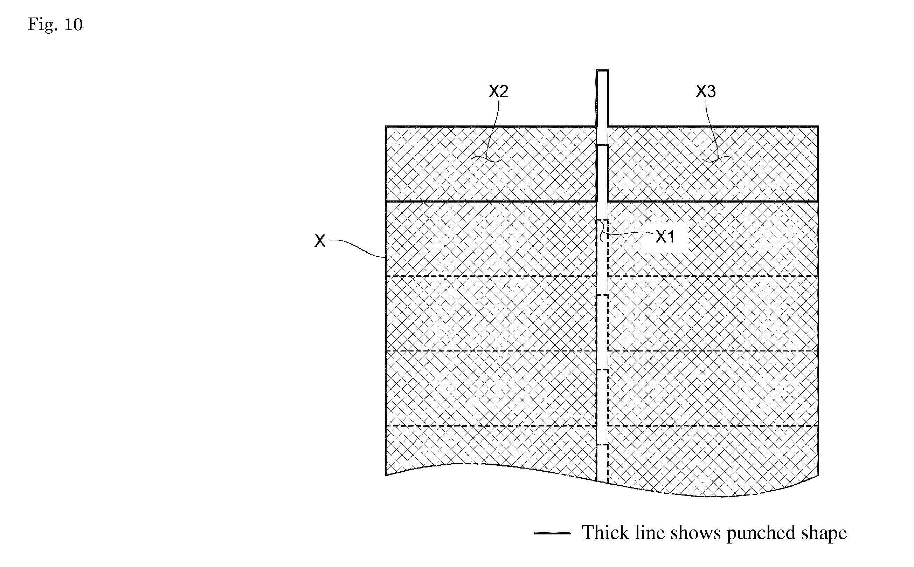

First, as shown in Fig. 10, while leaving an uncoated portion X1, which is linearly formed, intended to be the collector terminal 311 at a central portion along a longitudinal direction of a base material X in a long shape, positive active material is applied on opposite edges of the uncoated portion X1 to form coated portions X2 and X3. Then, the base material X is punched by using a die in the same shape as a developed shape of the positive electrode plate 31. In Fig. 10, a thick line shows a punched shape. Here, because the vertical dimensions L1 of the electrode piece portions 31A and 31B and the vertical dimension L2 of the connecting portion 31C are equal to each other, the respective positive electrode plates 31 can be punched so that their punched areas are continuous with each other, which substantially prevents punching losses.

Next, a manufacturing method of the alkaline storage battery 100 in the embodiment will be described briefly.

First, the one negative electrode plate 32 is deformed into a cylindrical shape and housed into the battery case 2. The positive electrode plate 31 formed as described above is formed into a substantially cylindrical shape by bending the electrode piece portions 31A and 31B of the positive electrode plate 31 in the vertical direction by using press dies into semicircular shapes and folding the electrode piece portions 31A and 31B in the left-right direction at the connecting portion 31C (collector terminal 311). The positive electrode plate 31 deformed in this manner is housed into the sack-shaped separator 33 and housed into the negative electrode plate 32 in such a manner that the collector terminal 311 is positioned on an upper edge. Then, in the hollow portion 3X of the element 3, the retaining member 6 deformed into the cylindrical shape smaller than an inner diameter of the hollow portion 3X is disposed. In this way, it is possible to fix the element 3 to the battery case 2. Then, an electrolyte solution is filled. After that, the collector terminal 311 of the positive electrode plate 31 is connected to a back face of a sealing body 5 and the sealing body 5 is fixed to an upper opening of the battery case 2 by caulking or the like with an insulating body 4 interposed therebetween. The electrolyte solution may be filled after the element 3 is housed into the battery case 2 and the retaining member 6 is disposed. If the separator 33 is not in the sack shape, the cylindrical positive electrode plate 31 may be disposed after the separator 33 is disposed in advance in the negative electrode plate 32.

In the alkaline storage battery 100 according to the embodiment formed as described above, because the positive electrode plate 31 in contact with the inner peripheral face of the separator 33 is split into the two electrode piece portions 31A and 31B in the circumferential direction, the respective electrode piece portions 31A and 31B move individually when they are pressed toward the inner peripheral face of the separator 33 from an inner side and therefore it becomes easy to press (compress) the element 3. As a result, it is possible to enhance charge-discharge efficiency of the alkaline storage battery 100. Moreover, because each of the positive electrode plate 31 and the negative electrode plate 32 is wound in one layer, it is possible to substantially reduce amounts of substrates for the positive electrode plate 31 and the negative electrode plate 32, and the separator 33 to be used and it is possible to reduce man-hours in manufacture such as winding of them.

The invention is not limited to the second embodiment.

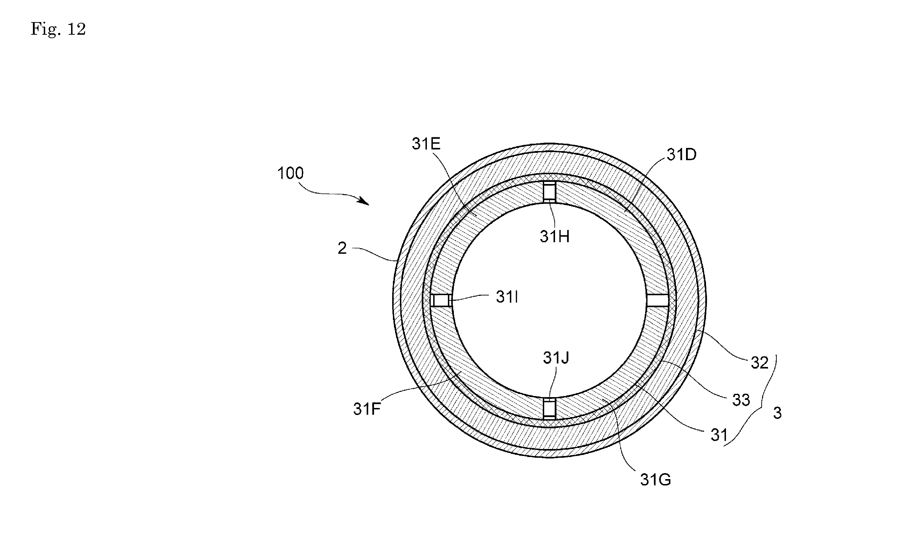

For example, although the positive electrode plate is split into two in the above second embodiment, dimensions of the left and right two electrode piece portions may be different. Moreover the positive electrode plate may be split into three or more. Here, an example in which the positive electrode plate is split into four is shown in Fig. 12. As shown in Fig. 12, portions of electrode piece portions 31D to 31G adjacent to each other are connected by connecting portions 31H to 31J (the connecting portion 31H is formed as a collector terminal 311) in such a manner that the electrode piece portions 31D to 31G form a substantially C shape when seen in an axial direction. By increasing the number of electrode piece portions formed by splitting in this manner, the respective electrode piece portions become more likely to move and it is possible to more reliably press the element.

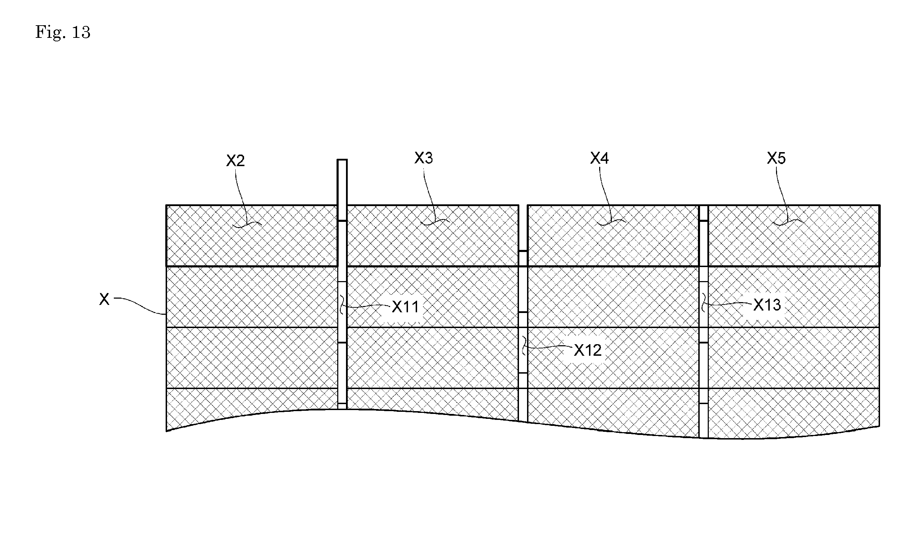

Here, a manufacturing method of the positive electrode plate 31 split into four will be briefly described. First, as shown in Fig. 13, while leaving uncoated portions X11 to X13, which are linearly formed, intended to be connecting portions 31H to 31J at central portions along a longitudinal direction of a base material X in a long shape, positive active material is applied on both sides of the uncoated portions X11 to X13 to form coated portions X2 to X5. Then, the base material X is punched by using a die in the same shape as a developed shape of the positive electrode plate 31. In Fig. 13, thick lines show a punched shape. Then, by bending the electrode piece portions 31D to 31G of the positive electrode plate 31 in a vertical direction into a partial arc shape and folding them at the respective connecting portions 31H to 31J into a zigzag shape, the positive electrode plate 31 is formed into a substantially cylindrical shape.

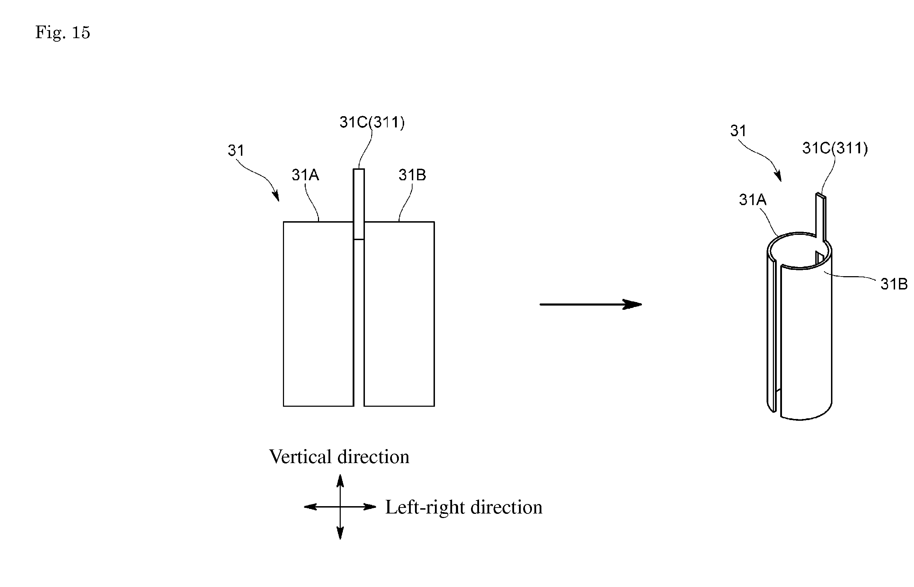

Moreover, as shown in Fig. 15, by bending a positive electrode plate 31 in a left-right direction into a semicircular shape and folding it at a collector terminal 311 in a left-right direction, the positive electrode plate 31 may be formed into a substantially cylindrical shape and housed into a battery case 2. With this structure, it is possible to make winding operation of the positive electrode plate easier.

Furthermore, although the connecting portion 31C also functions as the collector terminals 311 in the above second embodiment, the collector terminal 311 may be formed at the electrode piece portion 31A or 31B separately from the connecting portion 31C. In this case, although a position where the connecting portion 31C is provided is not limited to the upper end portions of the adjacent edges 31A1 and 31B1, the electrode piece portions are the most likely to move when the connecting portion 31C is provided to the end portions of the adjacent edges 31A1 and 31B1.

Although the positive electrode plate positioned on the inner side of the separator is split in the example described in the above second embodiment, a negative electrode plate may be split similarly to the positive electrode plate. In this way, because the negative electrode plate is split into a plurality of electrode piece portions in a circumferential direction, the respective electrode piece portions move individually and therefore it is easier to bring the respective electrode piece portions in contact with an inner peripheral face of a battery case.

Moreover, a slit may be formed at the collector terminal 311 to make it easy to bend the collector terminal 311. A plurality of slits may be formed along a width direction orthogonal to a longitudinal direction of the collector terminal 311.

In addition, although the element is formed by disposing the positive electrode plate, the separator, and the negative electrode plate in this order from the inner side in the above second embodiment, an element may be formed by disposing a negative electrode plate, a separator, and a positive electrode plate in this order from the inner side. In this case, the negative electrode plate is split into a plurality of electrode piece portions as in the above embodiment.

Although the positive electrode and the negative electrode in the above second embodiment is formed by applying the active materials on the perforated steel sheets, a positive electrode and a negative electrode may be formed by filling active materials into foamed substrates such as nickel porous bodies. A positive electrode may be formed by compressing active material powder into a predetermined shape (a cylindrical shape including a plurality of electrode piece portions) and current collection may be carried out through a collector plate.

Furthermore, a retaining member may have an outer peripheral face in such a shape as to be fitted with an inner peripheral face of an element in a state in which an outer peripheral face of the element is in contact with an inner peripheral face of a battery case. Specifically, the retaining member may be a cylindrical body or a circular columnar body made of resin or metal and in substantially the same shape as the inner peripheral face of the element (having an outer diameter substantially the same as a diameter of the inner peripheral face). In this way, it is possible to obtain similar effects to those in the above embodiment by fitting the retaining member in a hollow portion of the element housed in the battery case.

Although the element is formed by disposing the positive electrode plate, the separator, and the negative electrode plate in this order from the inner side in the above embodiment, an element may be formed by disposing a negative electrode plate, a separator, and a positive electrode plate in this order from the inner side.

Although the positive electrode and the negative electrode in the above embodiment is formed by applying the active materials on the perforated steel sheets, a positive electrode and a negative electrode may be formed by filling active materials into foamed substrates such as nickel porous bodies. A positive electrode may be formed by compressing active material powder into a predetermined shape (a cylindrical shape including a plurality of electrode pieces) and current collection may be carried out through a collector plate.

Furthermore, a retaining member may have an outer peripheral face in such a shape as to be fitted with an inner peripheral face of an element in a state in which an outer peripheral face of the element is in contact with an inner peripheral face of a battery case. Specifically, the retaining member may be a cylindrical body or a circular columnar body made of resin or metal and in substantially the same shape as the inner peripheral face of the element (having an outer diameter substantially the same as a diameter of the inner peripheral face). In this way, it is possible to obtain similar effects to those in the above embodiment by fitting the retaining member in a hollow portion of the element housed in the battery case.

The invention may be applied to a secondary battery such as a lithium ion secondary battery or to a primary battery besides the alkaline storage battery.

Needless to say, the invention is not limited the above embodiments and can be changed in various ways without departing from the gist of the invention.

### INDUSTRIAL APPLICABILITY

According to the invention, in the cylindrical battery, it is possible to make it easy to press the positive electrode or the negative electrode to enhance the discharge efficiency (in the case of the primary battery) or the charge-discharge efficiency (in the case of the secondary battery).

## Claims

1. A cylindrical battery comprising
a cylindrical battery case; and
a cylindrical element including a positive electrode, a negative electrode, and a separator,
wherein a space is formed on an inner side of the element, and
the positive electrode or the negative electrode is split into a plurality of electrode pieces in a circumferential direction.

2. The cylindrical battery according to claim 1, wherein the positive electrode or the negative electrode is split into the plurality of electrode pieces having circumferential lengths smaller than or equal to a half circumference.

3. The cylindrical battery according to claim 1 or 2, wherein the positive electrode or the negative electrode has a longer edge in a direction of a winding axis of the element than a circumferential edge.

4. The cylindrical battery according to any one of claims 1 to 3, wherein the positive electrode or the negative electrode includes a metal plate having a large number of through holes as a substrate.

5. The cylindrical battery according to any one of claims 1 to 4, wherein the positive electrode or the negative electrode is split into two electrode pieces.

6. The cylindrical battery according to any one of claims 1 to 5, wherein the positive electrode or the negative electrode includes a plurality of electrode piece portions formed by splitting in the circumferential direction and a connecting portion for connecting portions of the electrode piece portions adjacent to each other.

7. The cylindrical battery according to claim 6, wherein the connecting portion also functions as a collector terminal.

8. The cylindrical battery according to claim 6 or 7,
wherein the positive electrode or the negative electrode includes a metal plate having a large number of through holes as a substrate and
the electrode pieces and the connecting portion are formed integrally.

9. The cylindrical battery according to any one of claims 6 to 8, wherein edges in the circumferential direction of the electrode pieces are connected by the connecting portion.

10. The cylindrical battery according to any one of claims 6 to 9, wherein the connecting portion is disposed to be perpendicular to the winding axis of the element.

11. The cylindrical battery according to any one of claims 6 to 10, wherein a slit is formed at the connecting portion.

12. The cylindrical battery according to any one of claims 6 to 11, wherein the positive electrode or the negative electrode in a developed state includes the plurality of electrode piece portions and the connecting portion which connects upper end portions of adjacent edges of the electrode piece portions adjacent to each other and which is in a rectangular shape extending upward and outward and
vertical dimensions of the electrode piece portions and a vertical dimension of the connecting portion are equal to each other.
